# EUROPÄISCHE PATENTSCHRIFT

(11) **EP 2 840 046 B1**
(45) Veröffentlichungstag und Bekanntmachung des Hinweises auf die Patenterteilung: **01.02.2017**
(21) Anmeldenummer: 13004175.9
(22) Anmeldetag: 23.08.2013
(51) Int. Cl.: B65G 47/84, B65G 29/00, B65G 47/86

(54) **Fördereinrichtung, Bearbeitungssystem und Verfahren zur Förderung und Bearbeitung eines Werkstücks**
Conveying device, machining system and method for conveying and machining a workpiece
Dispositif de transport, système d'usinage et procédé pour le transport et l'usinage d'une pièce

(43) Veröffentlichungstag der Anmeldung: 25.02.2015
(73) Patentinhaber: HINTERKOPF GmbH, 73054 Eislingen (DE)
(72) Erfinder: Osswald, Steffen, 73312 Geislingen (DE); Weber, Joachim, 73342 Bad Ditzenbach (DE); Schulz, Joachim, 73326 Deggingen (DE); Drexler, Stefan, 73337 Bad Überkingen (DE)
(74) Vertreter: Patentanwälte Magenbauer & Kollegen Partnerschaft mbB

(56) Entgegenhaltungen:
- EP-A1- 2 808 277
- DE-A1- 10 017 050
- DE-A1- 10 261 127
- DE-A1-102007 011 060

## Beschreibung

Die Erfindung betrifft eine Fördereinrichtung zur Förderung von Werkstücken nach dem Oberbegriff des Anspruchs 1.

Aus der EP 0 770 566 D1 ist eine Vorrichtung zum Übergeben von Gegenständen, insbesondere Hohlkörper, wie Dosen und Tuben, von einem einlaufenden Transportmittel zu einem auslaufenden Transportmittel bekannt. Die Vorrichtung umfasst wenigstens einem drehangetriebenen Rotor, wenigstens ein mit einem Unterdruck beaufschlagbares Haltemittel für die Gegenstände, das zum gemeinsamen Antrieb an den Rotor angelenkt ist, wenigstens ein mit dem Haltemittel verbundenes Steuermittel, das zur Erzeugung einer ungleichförmigen Transportgeschwindigkeit des Haltemittels entlang einer Steuerkurve zwangsgeführt wird, wobei das Haltemittel zum Schwenken um eine zur Rotorachse parallele Schwenkachse auf einer um die Schwenkachse drehbaren Pendelwelle angeordnet ist und wobei vorgesehen ist, dass der Unterdruck am Haltemittel durch einen an der Stirnseite der Pendelwelle mündenden inneren Kanal erzeugt wird.

Aus der DE 100 17 050 A1 ist ein Verfahren zum Wenden von Vorformlingen in einem Einlaufstern um eine radiale Wendeachse aus einer Hängelage in eine Überkopflage bekannt, wobei im Einlaufstern während dessen Rotation der in Rotationsrichtung gesehene Abstand zwischen benachbarten Wendeachsen verändert wird.

Die DE 10 2007 011 060 A1 offenbart eine Fördereinrichtung zur Förderung von Werkstücken nach dem Oberbegriff des Anspruchs 1.

Die Aufgabe der Erfindung besteht darin, eine Fördereinrichtung, ein Bearbeitungssystem und ein Verfahren zur Förderung und Bearbeitung eines Werkstücks bereitzustellen, die in einfacher Weise rasch an unterschiedliche Transportbedürfnisse angepasst werden können.

Diese Aufgabe wird für eine Fördereinrichtung der eingangs genannten Art mit den Merkmalen des Anspruchs 1 gelöst. Hierbei ist vorgesehen, dass die Werkstückhalter der Werkstückhaltergruppe stets parallel zueinander ausgerichtet sind.

Mit einer derartigen Fördereinrichtung ist es möglich, durch die Anpassung einer Beabstandung der Werkstückhalter innerhalb einer Werkstückhaltergruppe eine Förderung von Werkstücken auch für denjenigen Fall schnell und effizient vorzunehmen, wenn die Werkstücke, bei denen sich beispielsweise um Aerosoldosenrohlinge oder Tubenrohlinge handeln kann, mit einer ersten Beabstandung längs einer Förderrichtung gemäß einer ersten Teilung aufzunehmen sind und mit einer zweiten, abweichenden Beabstandung längs der Förderrichtung gemäß einer zweiten Teilung abzugeben sind. Somit können mit Hilfe der Fördereinrichtung ungleiche Teilungen für die Beabstandung der Werkstücke zwischen einem einlaufenden Fördermittel und einem auslaufenden Fördermittel ausgeglichen werden. Dabei ist es vorteilhaft, dass mit den Werkstückhaltern einer Werkstückhaltergruppe, insbesondere zeitgleich und synchron, eine Anzahl von wenigstens zwei Werkstücken vom einlaufenden Fördermittel an einer Aufnahmestation aufgenommen und bis zu einer Abgabestation weitergefördert werden kann, wobei die an der Werkstückhaltergruppe aufgenommenen Werkstücke an der Abgabestation, insbesondere zeitgleich und synchron, an das auslaufende Fördermittel abgegeben werden können. Dabei findet während der Bewegung zwischen der Aufnahmestation und der Abgabestation eine Veränderung der Beabstandung zwischen den Werkstücken, die zumindest paarweise oder in Stückzahlen größer zwei an den Werkstückhaltern der Werkstückhaltergruppe aufgenommen sind, statt. Dies ermöglicht die gewünschte Anpassung zwischen der Teilung der Werkstücke, wie sie durch das einlaufende Fördermittel bestimmt wird, und der Teilung für die Werkstücke, wie sie durch das auslaufende Fördermittel bestimmt wird. Besonders bevorzugt ist vorgesehen, dass sämtliche Werkstückhalter einer Werkstückhaltergruppe zeitgleich und somit synchron die Werkstücke an der Aufnahmestation aufnehmen und/oder an der Abgabestation abgeben. Ergänzend oder alternativ ist vorgesehen, dass eine Veränderung der Beabstandung der Werkstücke zwischen der Aufnahmestation und der Abgabestation synchron für alle an den Werkstückhaltern der Werkstückhaltergruppe aufgenommenen Werkstücke erfolgt.

Vorteilhafte Weiterbildungen der Erfindung sind Gegenstand der Unteransprüche.

Zweckmäßig ist es, wenn die Verstellmittel für eine translatorische oder bogenförmige, insbesondere kreisbogenförmige, Relativbewegung wenigstens eines Werkstückhalters einer Werkstückhaltergruppe gegenüber einem zweiten Werkstückhalter und gegenüber dem Rotor in einer quer zur Rotorachse ausgerichteten Bewegungsebene ausgebildet sind. Die Bewegungsebene ist diejenige Ebene, in der die Werkstückhalter mit Hilfe der Verstellmittel längs einer geraden oder einer gekrümmten, insbesondere kreisbogenförmigen, Bewegungsbahn zur Veränderung ihrer Beabstandung bewegt werden. In Abhängigkeit von der Anzahl der Werkstückhalter, die eine Werkstückhaltergruppe bilden, kann es vorgesehen sein, dass zur Anpassung der Beabstandung der Werkstücke eine translatorische oder bogenförmige Relativbewegung lediglich eines Werkstückhalters oder mehrerer Werkstückhalter gegenüber weiteren Werkstückhaltern der Werkstückhaltergruppe und dem Rotor erfolgt. Alternativ kann vorgesehen werden, dass sämtliche Werkstückhalter der Werkstückhaltergruppe relativ zueinander bewegt werden. Bei einer vorteilhaften Ausführungsform der Erfindung ist vorgesehen, dass die Werkstückhaltergruppe zwei Werkstückhalter umfasst, die beide relativ zum Rotor und somit auch relativ zueinander bewegt werden, um die Anpassung der Beabstandung der Werkstücke vorzunehmen. Bei einer anderen Ausführungsform der Erfindung ist vorgesehen, dass die Werkstückhaltergruppe durch eine ungerade Anzahl von Werkstückhaltern gebildet wird, wobei ein zentral angeordneter Werkstückhalter keine Relativbewegung gegenüber dem Rotor vollzieht, während jeweils paarweise benachbart zum zentralen Werkstückhalter angeordnete Werkstückhalterpaare eine gegensinnige Relativbewegung um einen vorgegebenen Bewegungsweg oder ein ganzzahliges Vielfaches dieses Bewegungswegs vollziehen.

Bei einer Weiterbildung der Erfindung ist vorgesehen, dass die Verstellmittel für eine gegensinnige Translationsbewegung paarweise angeordneter, schiebebeweglich am Rotor aufgenommener Werkstückhalter einer Werkstückhaltergruppe quer zu einer von der Rotorachse ausgehenden Radialrichtung ausgebildet sind. Bei einer gegensinnigen Translationsbewegung ist vorgesehen, dass sich die paarweise angeordneten Werkstückhalter der Werkstückhaltergruppe jeweils in einander entgegengesetzten Richtungen bewegen. Bevorzugt ist vorgesehen, dass die paarweise angeordneten Werkstückhalter in gleichen Zeitabschnitten um gleiche Beträge bewegt werden. Besonders bevorzugt ist vorgesehen, dass die Werkstückhalter mit gleichen Verfahrgeschwindigkeiten gegensinnig zueinander bewegt werden. Die Bewegungsrichtung für die Werkstückhalter einer Werkstückhaltergruppe während der Verstellung durch die Verstellmittel liegt in der Bewegungsebene und ist normal/quer zu einer von der Rotorachse ausgehenden und in der Bewegungsebene liegenden Radialrichtung ausgerichtet. Alternativ kann die Bewegungsrichtung auch als Kreistangente an einem konzentrisch zur Rotorachse in der Bewegungsebene ausgebildeten Kreis beschrieben werden.

Da in der Praxis eine Verstellung der Beabstandung der Werkstückhalter während einer Bewegung des Rotors stattfindet, ergibt sich eine Überlagerung der Rotationsbewegung für die Werkstückhalter der Werkstückhaltergruppe mit einer Verstellbewegung für zumindest einen Teil der am Rotor angebrachten Werkstückhalter. Grundsätzlich führen alle Werkstückhalter der Werkstückhaltergruppe bedingt durch die gemeinsame Anbringung am Rotor die Rotationsbewegung um die Rotorachse mit einer gemeinsamen Winkelgeschwindigkeit durch. Durch die Einwirkung der Verstellmittel kann jedoch eine Beeinflussung der Winkelgeschwindigkeiten einzelner Werkstückhalter oder aller Werkstückhalter der Werkstückhaltergruppe erfolgen. Sofern die Verstellmittel derart ausgebildet sind, dass die Verstellung der Beabstandung der Werkstückhalter einer Werkstückhaltergruppe durch eine relative und gegensinnige Schwenkbewegung der Werkstückhalter zueinander um die Rotorachse erfolgt, findet durch die jeweilige Schwenkbewegung für den einzelnen Werkstückhalter eine unmittelbare Einflussnahme auf die Winkelgeschwindigkeit des jeweiligen Werkstückhalters statt. Bei Schwenkbewegungen, die eine von der Rotorachse abweichende Schwenkachse aufweisen und bei translatorischen Bewegungen der Werkstückhalter schlägt sich die Relativbewegung der Werkstückhalter zueinander nur anteilig in der jeweiligen Winkelgeschwindigkeit der Werkstückhalter nieder. Erfindungsgemäß ist vorgesehen, dass die jeweils gegensinnig bewegten Werkstückhalterpaare jeweils einen identischen Differenzbetrag zwischen einer individuellen Winkelgeschwindigkeit und der Winkelgeschwindigkeit der Werkstückhaltergruppe und des Rotors aufweisen.

Bevorzugt ist vorgesehen, dass die Werkstückhalter für eine Festlegung eines Stirnbereichs der Werkstücke ausgebildet sind. Beispielsweise kann vorgesehen sein, dass die Fördereinrichtung für eine Umsetzung der Werkstücke von den Fördermitteln auf eine mit Aufnahmedornen versehene Bearbeitungseinrichtung ausgebildet sind, wobei die exemplarisch hülsenförmig ausgebildeten Werkstücke mit einem offenen Endbereich auf die Aufnahmedornen aufgestellt werden sollen, weshalb eine Festlegung des Stirnbereichs der Werkstücke, der dem offenen Endbereich entgegengesetzt ist, an der Fördereinrichtung vorteilhaft ist. Für eine derartige Festlegung der Stirnbereiche der Werkstücke an den Werkstückhaltern können Haftkräfte beispielsweise durch Vakuumaufbringung hervorgerufen werden.

Bevorzugt ist vorgesehen, dass am Rotor mehrere Werkstückhaltergruppen, insbesondere mehrere zueinander in gleicher Winkelteilung angebrachte Werkstückhaltergruppen, angeordnet sind. Dadurch können bei einer Rotationsbewegung des Rotors um die Rotorachse mehrere Gruppen von Werkstücken durch die entsprechenden Werkstückhaltergruppen jeweils synchronisiert, insbesondere zeitgleich, aufgenommen werden, so dass die Fördereinrichtung eine vorteilhafte Förderleistung aufweisen kann. Vorzugsweise sind die Werkstückhaltergruppen in gleicher Winkelteilung um die Rotorachse angeordnet, um einen einfachen Bewegungsablauf der Rotationsbewegung des Rotors für das Aufnehmen und Abgeben der Werkstücke zu gewährleisten. Ferner werden dadurch unerwünschte Unwuchten des Rotors zumindest reduziert.

Vorteilhaft ist es, wenn die Verstellmittel für den jeweiligen Werkstückhalter einen beweglich mit dem Werkstückhalter und/oder dem Rotor gekoppelten Lenkhebel und eine drehfest zur Rotorachse angeordnete Steuerkurve für den Lenkhebel umfassen, um während der Rotationsbewegung des Rotors eine, insbesondere rotatorische, Zwangsbewegung des Lenkhebels zu bewirken. Die Aufgabe der Steuerkurve besteht darin, einen an der Steuerkurve anliegenden ersten Endbereich des Lenkhebels während der Rotationsbewegung des Rotors zyklisch zwischen einem Minimalabstand und einem Maximalabstand zur Rotorachse des Rotors einzustellen. Dadurch führt ein dem ersten Endbereich entgegengesetzter zweiter Endbereich des Lenkhebels je nach Kopplung des Lenkhebels mit dem Rotor und/oder dem Werkstückhalter eine Rotations- und/oder Translationsbewegung durch, mit deren Hilfe die gewünschte Verstellung der Beabstandung der Werkstückhalter vollzogen werden kann. Bei einer vorteilhaften Ausführungsform der Erfindung sind die Lenkhebel schwenkbeweglich am Rotor angebracht und sind mit den jeweils zugeordneten Werkstückhaltern über einen Führungspfosten gekoppelt, der in einem Langloch geführt ist. Bei dieser Ausführungsform stellt sich bei einer Schwenkbewegung des Lenkhebels eine Translationsbewegung des, insbesondere ausschließlich, linearbeweglich geführten Werkstückhalters ein.

Bei einer vorteilhaften Weiterbildung der Erfindung ist vorgesehen, dass die Steuerkurve in einer quer zu einer Rotorachse des Rotors ausgerichteten Steuerkurvenebene von einer unrunden, insbesondere elliptischen, Hüllkurve umgeben ist und/oder dass die Lenkhebel jeweils gleichartig innerhalb benachbarter Werkstückhaltergruppen angeordneter Werkstückhalter jeweils an gleichen Steuerkurven anliegen. Bei einer bezogen auf die Rotorachse des Rotors unrund ausgebildeten Hüllkurve für die Steuerkurve, beispielsweise einer exzentrisch zur Rotorachse angeordneten kreisförmigen Hüllkurve oder einer zentrisch oder exzentrisch zur Rotorachse angeordneten elliptischen Hüllkurve ist gewährleistet, dass der Lenkhebel, der mit seinem ersten Endbereich an dieser Steuerkurve anliegt, bei einer vollständigen Rotation des Rotors um die Rotorachse zumindest an einem Ort eine minimale Beabstandung gegenüber der Rotorachse und an zumindest einem anderen Ort eine maximale Beabstandung gegenüber der Rotorachse aufweist. Dadurch wird die gewünschte Verstellung der Beabstandung des jeweils zugeordneten Werkstückhalters gegenüber einem weiteren Werkstückhalter erzielt. Besonders vorteilhaft ist es, wenn an einem Rotor mehrere Werkstückhaltergruppen angeordnet sind und die Lenkhebel derjenigen Werkstückhalter, die in den unterschiedlichen Werkstückhaltergruppen am jeweils gleichen Ort angeordnet sind, auch von der gleichen Steuerkurven angesteuert werden, so dass sich für die jeweils gleich angeordneten Werkstückhalter auch die gleiche Bewegung während der Rotationsbewegung des Rotors um die Rotorachse einstellt. Dabei wird unterstellt, dass die Lenkhebel der jeweiligen Werkstückhalter gleichartig ausgebildet und angeordnet sind.

Vorzugsweise sind die Verstellmittel für eine konstante Beabstandung von jeweils paarweise angeordneten Werkstückhaltern einer Werkstückhaltergruppe zu einer mittig zwischen den Werkstückhaltern angeordneten, insbesondere die Rotorachse umfassenden, Mittelebene ausgebildet. Durch eine symmetrische Anordnung der Werkstückhalterpaare zu einer Mittelebene wird insbesondere die Integration der Fördereinrichtung in ein Bearbeitungssystem erleichtert, da für diese Integration das von der Rotorachse durchsetzte Drehzentrum des Rotors als Referenz für den Einbau in das Bearbeitungssystem genutzt werden kann.

Die Aufgabe der Erfindung wird gemäß einem zweiten Aspekt mit einem Bearbeitungssystem zur Bearbeitung von Werkstücken mit den Merkmalen des Anspruchs 9 gelöst. Dieses Bearbeitungssystem umfasst ein erstes Fördermittel, das für eine Bereitstellung von Werkstücken ausgebildet ist, eine Bearbeitungseinrichtung, die für eine Bearbeitung der vom ersten Fördermittel bereitgestellten Werkstücke und für einen Weitertransport der Werkstücke an ein zweites Fördermittel ausgebildet ist, sowie ein zweites Fördermittel, das für einen Abtransport der Werkstücke ausgebildet ist, wobei zwischen dem ersten Fördermittel und der Bearbeitungseinrichtung und/oder zwischen der Bearbeitungseinrichtung und dem zweiten Fördermittel eine Fördereinrichtung nach einem der Ansprüche 1 bis 8 angeordnet ist. Bei dem ersten und dem zweiten Fördermittel kann es sich um gleichartige oder unterschiedliche Fördermittel, beispielsweise um Kettenförderer, Förderbänder, Ladesterne handeln. Die Fördermittel ergreifen die Werkstücke entweder an einer Stirnseite, an einer hülsenförmigen Außenoberfläche oder durch eine endseitige Öffnung hindurch in einem Innenbereich formschlüssig und/oder kraftschlüssig und/oder durch Adhäsion und fördern die Werkstücke zu einer Aufnahmestation oder von einer Abgabestation. Bei der Bearbeitungseinrichtung handelt es sich beispielsweise um eine Druckmaschine zur Bedruckung einer Außenoberfläche der Werkstücke oder um eine Aufschraubmaschine zur Anbringung von Schraubverschlüssen an den Werkstücken, insbesondere Tubenrohlingen. Je nach Ausgestaltung der Bearbeitungseinrichtung kann eine Beabstandung von Aufnahmedornen oder anderen Aufnahmeeinrichtungen der Bearbeitungseinrichtung für die Werkstücke gemäß einer Teilung vorgesehen sein, die von einer Beabstandung der Werkstücke am ersten und/oder zweiten Fördermittel abweicht. Derartige Teilungsunterschiede können mit Hilfe der Fördereinrichtungen ausgeglichen werden. Beispielsweise kann wenigstens eine Fördereinrichtung eingesetzt werden, wenn eine Bearbeitungseinrichtung in ein bestehendes Bearbeitungssystem mit vorgegebenen Teilungen der Fördermittel integriert werden soll.

Bei einer vorteilhaften Weiterbildung eines Bearbeitungssystems ist vorgesehen, dass die Bearbeitungseinrichtung für eine diskontinuierliche Bearbeitung und für einen diskontinuierlichen Weitertransport der Werkstücke ausgebildet ist und dass das erste Fördermittel und/oder das zweite Fördermittel mit einem der jeweiligen Fördereinrichtung zugeordneten, zumindest bereichsweise diskontinuierlich arbeitenden Förderabschnitt ausgestattet sind. Beispielsweise ist die Bearbeitungseinrichtung in der Art eines Rundschalttisches ausgebildet, bei dem eine Anzahl von, insbesondere als Dornen, ausgeführte Werkstückaufnahmen an einer umlaufenden kreiszylindrischen Oberfläche eines Werkstücktisches vorgesehen sind. Diese Werkstückaufnahmen können mit gleicher Winkelteilung zu einer Rotorachse des Werkstücktisches angeordnet sein oder zu Werkstückaufnahmengruppen mit fester Beabstandung angeordnet sein, wobei die Werkstückaufnahmengruppen mit gleicher Winkelteilung zu einer Rotorachse des Werkstücktisches angeordnet sein können. Vorzugsweise ist die Rotorachse in vertikaler Richtung ausgerichtet und die Werkstückaufnahmen sind in einer normal/quer zur Rotorachse des Werkstücktisches und somit horizontal ausgerichteten Bewegungsebene angeordnet. Dementsprechend werden auch die, insbesondere hülsenförmig ausgebildeten, Werkstücke derart am Werkstücktisch aufgenommen, dass Längsachsen der Werkstücke in der Bewegungsebene oder in einer parallel zur Bewegungsebene angeordneten Werkstückebene ausgerichtet sind. Die Bewegung des Werkstücktisches um die Rotorachse erfolgt als Drehschrittbewegung, also als Abfolge von Schwenkbewegungen und Stillstandszeiten, wobei insbesondere die Stillstandszeiten für eine Bearbeitung der Werkstücke genutzt werden können. Zur Bearbeitung der Werkstücke sind in axialer Richtung außen gegenüberliegend zu den Werkstückaufnahmen und/oder unterhalb und/oder oberhalb der Werkstückaufnahmen geeignete Bearbeitungsmittel angeordnet, die beispielsweise ein Aufschrauben von Schraubverschlüssen auf die Werkstücke oder ein Bedrucken der Werkstücke ermöglichen. Aufgrund der diskontinuierlichen Bewegung der Bearbeitungseinrichtung erfolgen eine Zuführung und eine Abführung von Werkstücken zur Bearbeitungseinrichtung bzw. von der Bearbeitungseinrichtung vorzugsweise mit Hilfe der Fördereinrichtungen ebenfalls diskontinuierlich. Für eine Bereitstellung der Werkstücke sowie eine Abfuhr der bearbeiteten Werkstücke ist es vorgesehen, dass wenigstens eines der Fördermittel mit einem zumindest bereichsweise diskontinuierlich arbeitenden Förderabschnitt ausgestattet ist. Wahlweise kann vorgesehen werden, dass das jeweilige Fördermittel insgesamt für einen diskontinuierlichen Transport der Werkstücke ausgebildet ist. Alternativ kann vorgesehen sein, dass das Fördermittel bereichsweise für eine kontinuierliche Förderung von Werkstücken und im Bereich der Fördereinrichtung für eine diskontinuierliche Förderung der Werkstücke ausgebildet ist. Beispielsweise kann bei einem Kettenförderer ein Förderabschnitt vorgesehen sein, in dem die Förderkette durch mehrere, teilteilweise beweglich gelagerte Umlenkrollen und zusätzliche Antriebsmittel diskontinuierlich bewegt werden kann.

In weiterer Ausgestaltung des Bearbeitungssystems ist vorgesehen, dass am ersten Fördermittel eine Beabstandung der Werkstücke gemäß einer ersten Teilung ausgebildet ist, dass an der Bearbeitungseinrichtung eine Beabstandung der Werkstücke gemäß einer zweiten Teilung ausgebildet ist und dass am dritten Fördermittel eine Beabstandung der Werkstücke gemäß einer dritten Teilung ausgebildet ist, wobei die erste und/oder die zweite Fördereinrichtung für einen Ausgleich unterschiedlicher Teilungen während der Rotationsbewegung des Rotors ausgebildet sind.

Die Aufgabe der Erfindung wird gemäß einem dritten Erfindungsaspekt für ein Verfahren zur Förderung und Bearbeitung eines Werkstücks mit den Merkmalen des Anspruchs 12 gelöst: Bereitstellen eines Werkstücks von einem ersten Fördermittel an eine Bearbeitungseinrichtung, Bearbeiten des Werkstücks mit der Bearbeitungseinrichtung und Abtransportieren des Werkstücks von der Bearbeitungseinrichtung mit einem zweiten Fördermittel, wobei das erste Fördermittel und/oder das zweite Fördermittel eine von der Bearbeitungseinrichtung abweichende Teilung für eine Beabstandung der Werkstücke längs einer Förderrichtung aufweisen und wobei eine Anpassung einer Teilung für die Werkstücke zwischen dem ersten Fördermittel und der Bearbeitungseinrichtung und/oder zwischen der Bearbeitungseinrichtung und dem zweiten Fördermittel durch Verkleinerung oder Vergrößerung einer Beabstandung zwischen jeweils wenigstens zwei gleichzeitig vom ersten Fördermittel abgenommenen oder an das zweite Fördermittel bereitgestellten Werkstücken erfolgt. Mit diesem Verfahren können somit Teilungsunterschiede für die Beabstandung von Werkstücken, die sich durch unterschiedliche Teilungen für Werkstückaufnahmen an den Fördermitteln und an der Bearbeitungseinrichtung ergeben, ausgeglichen werden, wobei eine Anpassung der Beabstandung der Werkstücke zwischen dem ersten Fördermittel und der Bearbeitungseinrichtung und/oder zwischen der Bearbeitungseinrichtung und dem zweiten Fördermittel mit einer Fördereinrichtung mit einem drehbeweglich um eine Rotorachse gelagerten Rotor, mit einem Drehantrieb für eine Einleitung einer Rotationsbewegung auf den Rotor und mit wenigstens einer Werkstückhaltergruppe, die wenigstens zwei am Rotor angebrachte Werkstückhalter umfasst, die zu einer wenigstens paarweisen Aufnahme von Werkstücken an einer Aufnahmeposition und zu einer wenigstens paarweisen Abgabe von Werkstücken an einer Abgabeposition während der Rotationsbewegung des Rotors ausgebildet sind, sowie mit Verstellmitteln, die mit zumindest einem Werkstückhalter der Werkstückhaltergruppe gekoppelt sind und die für eine zyklische Einstellung einer Beabstandung von Werkstückhaltern der Werkstückhaltergruppe in Abhängigkeit von der Rotationsbewegung des Rotors ausgebildet sind, wobei die Werkstückhalter der Werkstückhaltergruppe stets parallel zueinander ausgerichtet sind, erfolgt.

Bei einer vorteilhaften Weiterbildung des Verfahrens ist vorgesehen, dass eine Förderung der Werkstücke zwischen dem ersten Fördermittel, der Bearbeitungseinrichtung und dem zweiten Fördermittel zumindest abschnittsweise diskontinuierlich erfolgt.

Eine vorteilhafte Ausführungsform der Erfindung ist in der Zeichnung dargestellt. Hierbei zeigt:
- Figur 1: eine schematische Draufsicht auf ein Bearbeitungssystem mit einem ersten Fördermittel, einer ersten Fördereinrichtung, einer Bearbeitungseinrichtung, einer zweiten Fördereinrichtung sowie einem zweiten Fördermittel,
- Figur 2: eine perspektivische Darstellung der Fördereinrichtung gemäß der Figur 1 mit einem Rotor und exemplarisch vier am Rotor angeordneten Werkstückhaltergruppen, und
- Figur 3: eine Draufsicht auf eine der Werkstückhaltergruppen der Fördereinrichtung in zwei unterschiedlichen Bewegungsphasen.

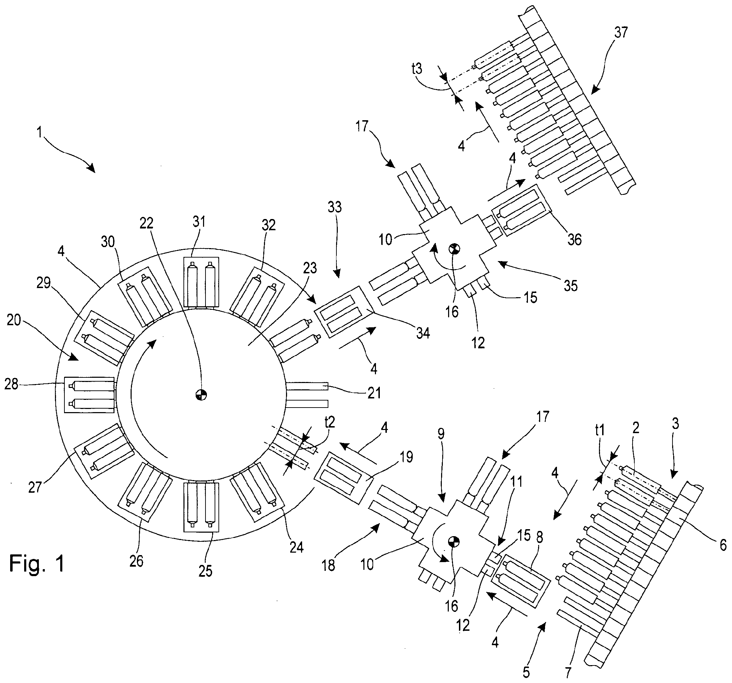

In der Figur 1 ist ein Bearbeitungssystem 1 zur Bearbeitung von exemplarisch als Tubenrohlingen ausgebildeten Werkstücken 2 dargestellt. Die Werkstücke 2 weisen exemplarisch einen nicht näher bezeichneten hülsenförmigen Grundkörper auf, der an einem ersten Ende eine kreisförmige Öffnung und an einem zweiten Ende einen bereichsweise verjüngt ausgebildeten und beispielsweise mit einem Schraubgewinde versehenen Stirnbereich aufweist, an dem zu einem späteren Zeitpunkt beispielsweise ein Schraubverschluss angebracht werden kann.

Die von einer nicht dargestellten, vorherigen Bearbeitungseinrichtung kommenden Werkstücke 2 werden mit Hilfe eines exemplarisch als Kettenförderer ausgebildeten ersten Fördermittels 3 längs einer Förderrichtung 4 an einer Aufnahmeposition 5 bereitgestellt. Für die Förderung der Werkstücke 2 ist an jedem Kettenglied 6 des ersten Fördermittels 3 eine quer zur Förderrichtung 4 ausgerichtete Haltestange 7 angebracht, auf die das Werkstück 2 mit seinem offenen Ende aufgesteckt ist. An der Aufnahmeposition 5 werden die Werkstücke 2 exemplarisch paarweise, praktisch auch mit anderen von eins abweichenden Stückzahlen, insbesondere zeitgleich, mittels eines ersten Transportwagens 8 von den Haltestangen 7 abgezogen und translatorisch längs der nicht dargestellten Mittelachsen der Werkstücke 2 in der Förderrichtung 4 des Transportwagens 8 bis zu einer ersten Fördereinrichtung 9 bewegt.

Die erste Fördereinrichtung 9 ist exemplarisch mit einem kreuzförmig ausgebildeten Grundkörper 10 versehen, wobei an jedem stirnseitigen Ende des Grundkörpers 10 jeweils eine Werkstückhaltergruppe 11 angeordnet ist, die ihrerseits exemplarisch zwei Werkstückhalter 12 und 15 umfasst. Die Werkstückhalter 12, 15 sind für eine Aufnahme der Stirnseiten der Werkstücke 2 ausgebildet und können somit die Werkstücke 2 vom ersten Transportwagen 8 aufnehmen. Der erste Transportwagen 8 kann dazu eingerichtet sein, den Rückweg zur Aufnahmeposition 5 einzutreten, sobald die Werkstücke 2 an den Werkstückhaltern 12, 15 aufgenommen sind und führt somit eine lineare Oszillationsbewegung durch, die mit einem für die erste Fördereinrichtung 9 und das erste Fördermittel 3 angewendeten Arbeitstakt synchronisiert ist.

Nachfolgend vollzieht die erste Fördereinrichtung 9 eine Drehschrittbewegung um eine Rotorachse 16 und überstreicht bei jedem Drehschritt exemplarisch einen Winkelbereich von 90 Grad. Somit werden die beiden gerade vom Transportwagen 8 aufgenommenen Werkstücke 2 in einem ersten Drehschritt in eine Zwischenposition 17 gefördert, aus der sie erst in einem zweiten Drehschritt in eine erste Übergabeposition 18 weiter gefördert werden. Somit ergibt sich exemplarisch ein halbkreisförmiger Förderweg für die Werkstücke 2. Je nach Anforderung können auch andere Förderwege, beispielsweise als Viertelkreis oder als Dreiviertelkreis, vorgesehen werden.

In der ersten Übergabeposition 18 ist ein zweiter Transportwagen 19 dazu vorgesehen, die von der ersten Fördereinrichtung 9 bereitgestellten Werkstücke 2 von den Werkstückhaltern 12, 15 abzuziehen und die Werkstücke 2 durch eine translatorische Bewegung längs der Förderrichtung 4, die als Teil einer linearen Oszillationsbewegung ausgebildet ist, an die Bearbeitungseinrichtung 20 bereitzustellen. Die Bearbeitungseinrichtung 20 weist zur Aufnahme der Werkstücke 2 drehbar um ihre Längsachsen gelagerte, insbesondere mit nicht dargestellten Antriebsmitteln ausgerüstete, Aufnahmedorne 21 auf. Die Aufnahmedorne 21 sind exemplarisch jeweils paarweise an einem drehbar um eine Rotorachse 22 gelagerten und mit einer nicht dargestellten Antriebseinrichtung versehenen Werkstücktisch 23 angebracht.

An der Bearbeitungseinrichtung 20 sind schematisch dargestellte Bearbeitungsstationen 24, 25, 26, 27, 28, 29, 30, 31, 32 ausgebildet, die exemplarisch für eine Bearbeitung der zylindrischen Außenoberfläche der Werkstücke 2 vorgesehen sind. Beispielsweise handelt es sich bei der Bearbeitungsstation 24 um eine Kontrollstation, die die Oberfläche der Werkstücke 2 vor der nachfolgenden Bearbeitung auf Fehlerstellen untersucht. Die Bearbeitungsstationen 25, 26, 27, 28 und 29 dienen dazu, unterschiedliche Farben auf die Oberfläche der Werkstücke 2 aufzutragen und auszuhärten. An den Bearbeitungsstationen 30, 31 und 32 findet eine abschließende Kontrolle der bearbeiteten Werkstücke 2 statt. Um eine ordnungsgemäße Bearbeitung der Werkstücke 2 an den Bearbeitungsstationen 25 bis 32 zu ermöglichen, ist es vorgesehen, dass die Werkstücke an den jeweiligen Bearbeitungsstationen 25 bis 32 jeweils kurzeitig verweilen. Um dies zu erreichen wird die Rotation des Werkstücktischs 23 um die Rotorachse 22 als Drehschrittbewegung durchgeführt. Hierbei wird mit jedem Drehschritt von den jeweiligen Paaren von Aufnahmedornen 21 exemplarisch ein Winkelbereich von 30 Grad überstrichen. Dementsprechend stellt die Bewegung des Werkstücktischs 23 eine diskontinuierliche Förderbewegung für die Werkstücke 2 dar, da ausgehend von einem Stillstand des Werkstücktischs 23 eine Beschleunigung und eine unmittelbar darauf erfolgende Abbremsung des Werkstücktischs 23 bis zum Stillstand erfolgt, wobei die Werkstücke 2 im Rahmen dieser kreisförmigen Bewegung längs der Förderrichtung 4 jeweils von einer vorherigen zu einer nachfolgenden Bearbeitungsstation gefördert werden.

An einer zweiten Übergabeposition 33 erfolgt mit Hilfe eines dritten Transportwagens 34 ein Abziehen der Werkstücke 2 von den Aufnahmedornen 21 sowie ein Transport der Werkstücke 2 längs der Förderrichtung 4 bis zu einer zweiten Fördereinrichtung 35. Die zweite Fördereinrichtung 35 ist identisch wie die erste Fördereinrichtung 9 aufgebaut, so dass für gleiche Komponenten die gleichen Bezeichnungen und Bezugszeichen verwendet werden können. Die zweite Fördereinrichtung 35 fördert die Werkstücke exemplarisch jeweils paarweise mit den zugeordneten Werkstückhaltergruppen 11 im Drehschrittbetrieb über die Zwischenposition 17 und einen vierten Transportwagen 36 zur zweiten Fördereinrichtung 37. Die zweite Fördereinrichtung 37 ist exemplarisch ebenfalls als Kettenförderer ausgebildet, so dass für gleiche Komponenten die gleichen Bezeichnungen und Bezugszeichen wie beim ersten Fördermittel 3 verwendet werden.

Exemplarisch ist vorgesehen, dass das erste Fördermittel 3 eine erste Teilung t1 für eine Beabstandung der Werkstücke 2 längs der Förderrichtung 4 aufweist. Die paarweise angeordneten Aufnahmedorne 21 der Bearbeitungseinrichtung 20 weisen eine zweite Teilung t2 für eine Beabstandung der Werkstücke 2 auf, die sich exemplarisch von der ersten Teilung t1 unterscheidet und die insbesondere größer als die erste Teilung t1 gewählt ist. Das zweite Fördermittel 37 weist eine dritte Teilung t3 für eine Beabstandung der Werkstücke 2 längs der Förderrichtung 4 auf. Exemplarisch ist vorgesehen, dass das erste und das zweite Fördermittel 3, 37 jeweils identisch aufgebaut sind, so dass die Teilung t3 der Teilung t1 entspricht. Bei einer nicht dargestellten Ausführungsform des Bearbeitungssystems weisen das erste und das zweite Fördermittel unterschiedliche Teilungen für eine Beabstandung der Werkstücke längs der Förderrichtung auf, ferner kann noch vorgesehen sein, dass die Bearbeitungseinrichtung eine von den unterschiedlichen Teilungen der Fördermittel abweichende, weitere Teilung aufweist.

Dementsprechend ist es die Aufgabe der Fördereinrichtungen 9 und 35, einen Teilungsausgleich vorzunehmen, um einen möglichst ungestörten Transport der Werkstücke 2 längs der Förderrichtung 4 vornehmen zu können. Diese Aufgabe wird von den Fördereinrichtungen 9 und 35 dadurch gelöst, dass während einer Drehbewegung, insbesondere einer intermittierenden Drehschrittbewegung, eine Beabstandung zwischen den zumindest paarweise an der jeweiligen Werkstückhaltergruppe 11 aufgenommenen Werkstücken 2 verändert wird. Beispielhaft ist vorgesehen, dass die mit der Teilung t1 vom ersten Fördermittel 3 aufgenommenen Werkstücke 2 im Zuge der halbkreisförmigen Drehbewegung der Fördereinrichtung 9 durch parallele, gegensinnige Verschiebung der Werkstücke 2 auf die Teilung t2 angepasst werden, die an der Bearbeitungseinrichtung 20 für die Aufnahmedorne 21 vorgesehen ist. Die Aufgabe der Fördereinrichtung 35 besteht hingegen darin, die mit der Teilung t2 von der Bearbeitungseinrichtung 20 bereitgestellten Werkstücke 2 im Zuge der Drehbewegung durch parallele, gegensinnige Verschiebung der Werkstücke 2 auf die Teilung t3 anzupassen.

Erfindungsgemäß ist vorgesehen, dass die Werkstücke 2 parallel zueinander an den Werkstückhaltern 12, 15 der Werkstückhaltergruppe 11 angeordnet sind. Eine Einstellung der Beabstandung der Werkstücke 2 erfolgt bei der in den Figuren 1 bis 3 dargestellten Ausführungsform der Fördereinrichtung 9, 37 durch parallele, gegensinnige Verschiebung beider Werkstücke 2 zueinander. Bei einer nicht dargestellten Ausführungsform der Fördereinrichtung kann auch eine Überlagerung einer Verschiebebewegung und einer Schwenkbewegung oder eine ausschließliche Schwenkbewegung der Werkstückhalter vorgesehen sein, derartige Abwandlungen werden insbesondere bei abweichend gestalteten, nicht dargestellten Fördermitteln benötigt.

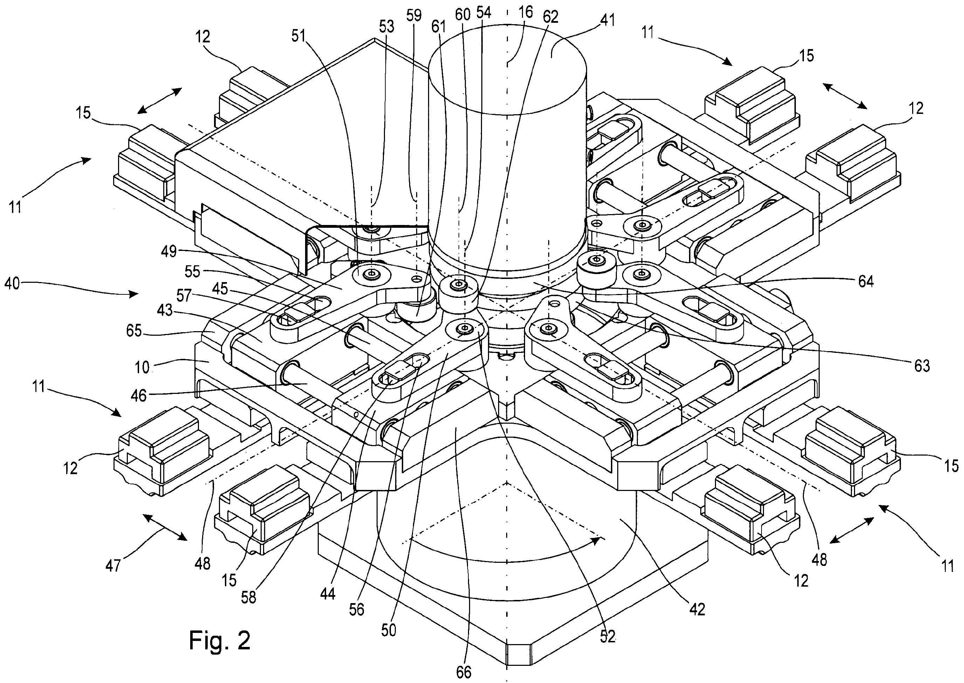

In der Figur 2 ist exemplarisch die Fördereinrichtung 9 näher dargestellt. Die Fördereinrichtung 9 umfasst einen drehbeweglich zur Rotorachse 16 gelagerten Rotor 40. Am Rotor 40 sind beispielhaft vier um jeweils 90 Grad zur Rotorachse 16 versetzt angeordnete Werkstückhaltergruppen 11, die exemplarisch jeweils zwei Werkstückhalter 12, 15 umfassen, angeordnet. Die in der Figur 2 gezeigten Werkstückhalter 12, 15 dienen nicht direkt der Aufnahme von Stirnbereichen der Werkstücke 2, sondern bilden Schnittstellen für nicht dargestellte Adapter, mit deren Hilfe die Stirnbereiche der Werkstücke 2 aufgenommen werden können. Bevorzugt ist vorgesehen, an den nicht dargestellten Adaptern eine Unterdruckbeaufschlagung bereitzustellen, um eine zuverlässige Festlegung der Werkstücke 2 an den Adaptern zu gewährleisten. Ferner umfasst die Fördereinrichtung 9 einen exemplarisch als elektrischen Servoantrieb, insbesondere Drehstrom-Asynchronmotor ausgebildeten, Drehantrieb 41 für eine Einleitung einer Rotationsbewegung auf den Rotor 40. Für eine winkeltreue Positionierung der Werkstückhaltergruppen 11 sind dem Drehantrieb 41 ein nicht dargestellter Drehwinkelsensor sowie eine ebenfalls nicht dargestellte Ansteuereinrichtung zugeordnet, die eine Energieversorgung des Drehantriebs 41 derart durchführen, dass dieser die gewünschten Winkelstellungen im intermittierenden Drehschrittbetrieb präzise anfahren kann. Vorzugsweise ist zwischen dem Drehantrieb 41 und dem Rotor 40 ein nicht näher dargestelltes, in einem Getriebegehäuse 42 aufgenommenes Untersetzungsgetriebe angeordnet, wodurch die Drehbewegungen des Drehantriebs 41 verlangsamt und eine Erhöhung der Präzision für die Drehpositionierung erreicht werden kann. Durch die Anordnung der Werkstückhaltergruppen 11 an dem exemplarisch kreuzförmig ausgebildeten Grundkörper 10 des Rotors 40 werden sämtliche Werkstückhaltergruppen 11 stets mit der gleichen Winkelgeschwindigkeit um die Rotorachse 16 bewegt. Um dennoch eine Anpassung der Teilung vornehmen zu können, ist exemplarisch vorgesehen, dass eine Beabstandung der Werkstückhalter 12, 15 während der Drehbewegung des Rotors 40 verändert werden kann. Diese Veränderung der Beabstandung der Werkstückhalter 12, 15 erfolgt bei der in den Figuren 1 bis 3 dargestellten Ausführungsform der Erfindung durch eine gegensinnige Parallelverschiebung der Werkstückhalter 12, 15. Dabei ist exemplarisch vorgesehen, dass beide Werkstückhalter 12, 15 um den gleichen Betrag in entgegengesetzte Richtungen linear verschoben werden. Durch diese lineare Verschiebung, die während der Rotationsbewegung des Rotors 40 erfolgt, erhöht sich die Winkelgeschwindigkeit für den einen Werkstückhalter 12, 15, der bei der Verstellung eine in Richtung der Winkelgeschwindigkeit weisende lineare Bewegungskomponente erfährt. Für den jeweils anderen Werkstückhalter 12, 15 stellt sich durch die entgegen der Richtung der Winkelgeschwindigkeit weisende lineare Bewegungskomponente eine gleich große Verringerung der Winkelgeschwindigkeit ein.

Für die Verstellung der Beabstandung der Werkstückhalter 12, 15 während der Drehbewegung des Rotors 40 sind die Werkstückhalter 12, 15 jeweils an einem Lagerbock 43, 44 angebracht. Jeder der Lagerböcke 43, 44 ist schiebebeweglich an parallel zueinander ausgerichteten Führungsstangen 45, 46 angebracht. Hierdurch wird eine Parallelverschiebung der Werkstückhalter 12, 15 längs einer Bewegungsachse 47 ermöglicht, die in einer normal zur Rotorachse 16 ausgerichteten, nicht dargestellten Bewegungsebene aufgenommen ist. Exemplarisch sind die Bewegungsachsen 47 normal zu Radialachsen 48 ausgerichtet, wobei sich die Radialachsen 48 in der Ausführungsform der Fördereinrichtung 9 gemäß Figur 2 in der Rotorachse 16 schneiden. Die Radialachse 48 und die Rotorachse 16 spannen eine ebenfalls nicht dargestellte Mittelebene auf, die bei der Ausführungsform der Fördereinrichtung 9 gemäß der Figur 2 als Spiegelsymmetrieebene für die gegensinnige translatorische Bewegung der Werkstückhalter 12, 15 dient.

Für die Einleitung der gewünschten Relativbewegung der beiden Werkstückhalter 12, 15 zueinander und gegenüber dem Grundkörper 10 des Rotors 40 sind jedem der Lagerböcke 43, 44 jeweils ein als Verstellmittel dienender, beweglich mit dem jeweiligen Lagerbock 43, 44 und dem Rotor 40 gekoppelter Lenkhebel 49, 50 zugeordnet. Exemplarisch sind die Lenkhebel 49, 50 jeweils mittels eines Schwenklagers 51, 52 schwenkbeweglich um Schwenkachsen 53, 54 am Grundkörper 10 des Rotors 40 angeordnet. Um eine statische Überbestimmung zu vermeiden und eine Umsetzung der Schwenkbewegungen der Lenkhebel 49, 50 in gegensinnige Translationsbewegungen der Lagerböcke 43, 44 und der daran angebrachten Werkstückhalter 12, 15 zu ermöglichen, sind die Lenkhebel 49, 50 mit den Lagerböcken 43, 44 jeweils über eine Kombination eines im Lenkhebel 49, 50 ausgebildeten Langlochs 55, 56 und eines im zugeordneten Lagerbock 43, 44 festgelegten Lagerzapfens 57, 58 gekoppelt.

An einem dem jeweiligen Langloch 55, 56 entgegengesetzten Endbereich des jeweiligen Lenkhebels 49, 50 ist jeweils eine drehbar gelagerte, vorzugsweise mit einer parallel zur Rotorachse 16 ausgerichteten Drehachse 59, 60 ausgebildete Lagerrolle 61, 62 angebracht. Die Lagerrollen 61, 62 liegen an jeweils einer von beispielsweise zwei Steuerkurven 63, 64 an, die exemplarisch drehfest zur Rotorachse 16 angeordnet sind. Beispielsweise können die Steuerkurve 63, 64 als exzentrisch zur Rotorachse 16 angeordnete Kreisscheiben ausgebildet sein, wobei in diesem Fall die Exzentrizität der Steuerkurven 63, 64 so gewählt ist, das die Lenkhebel 49, 50 die Lagerböcke 43, 44 bei Überstreichen eines Schwenkwinkelbereichs von 180 Grad um die Rotorachse 16 aus einer maximal beanstandeten Stellung, die beispielsweise der Teilung t2 entspricht, in eine minimal beabstandete Stellung, die beispielsweise der Teilung t1 oder t3 entspricht, oder umgekehrt verfahren können. Um eine zuverlässige Anlage der dem Lenkhebel 49, 50 zugeordneten Lagerrollen 61, 62 an den Steuerkurven 63, 64 zu gewährleisten, sind zwischen den Lagerböcken 43, 44 und am Grundkörper 10 des Rotors 40 festgelegten Haltern 65, 66 für die Führungsstangen 45, 46 jeweils nicht näher dargestellte, druckvorgespannte Federmittel vorgesehen. Durch die von den Federmitteln ausgeübten Druckkräfte werden die Lagerrollen 61, 62 an die Steuerkurven 63, 64 stets angepresst, wodurch die Zwangsbewegung der Lagerböcke 43, 44 und der daran angebrachten Werkstückhalter 12, 15 gewährleistet ist. Exemplarisch ist ferner vorgesehen, dass die Lenkhebel 49 der Werkstückhalter 12, die jeweils gleichartig innerhalb der Werkstückhaltergruppen 11 angeordnet sind, mit ihren Lagerrollen 61 an der gleichen Steuerkurve 63 anliegen und dass die Lenkhebel 50 der Werkstückhalter 15, die jeweils gleichartig innerhalb der Werkstückhaltergruppen 11 angeordneter sind, mit ihren Lagerrollen 62 an der gleichen Steuerkurve 64 anliegen.

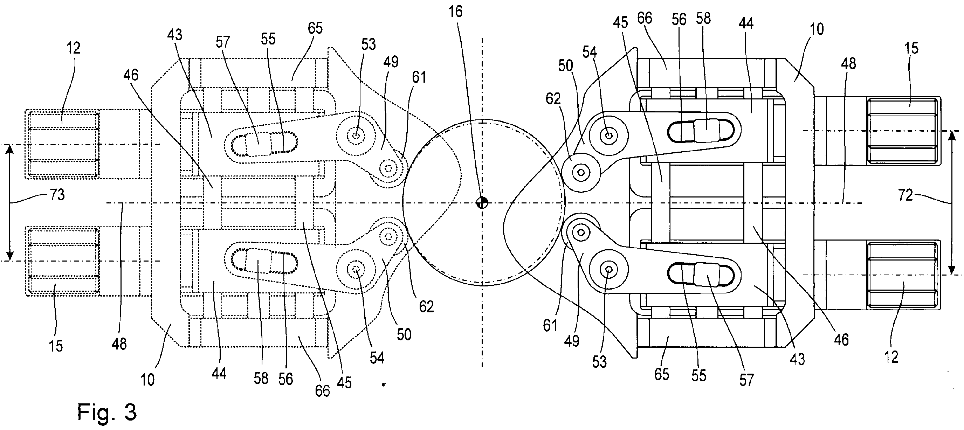

Wie aus der Darstellung der Figur 3 entnommen werden kann, in der ein Ausschnitt des Rotors 40 mit der daran angeordneten Werkstückhaltergruppe 11 in zwei unterschiedlichen, exemplarisch um 180 Grad zueinander verschwenkten Betriebsstellungen gezeigt ist, liegen die beiden Lagerrollen 61, 62 an einer Steuerkurve 67 an, die in der Figur 3 stark vereinfacht dargestellt ist. Die Steuerkurve 67 weist abweichend von den in der Figur 2 dargestellten Steuerkurven 63, 64 eine unrund ausgebildete Hüllkurve auf, wie durch Vergleich mit der ausschließlich zur darstellerischen Verdeutlichung der Unrundheit der Steuerkurve eingezeichneten Kreisbahn 68 hervorgeht, deren Kreiszentrum 69 mit der normal zur Darstellungsebene der Figur 3 verlaufenden Rotorachse zusammenfällt. Dabei ist die Steuerkurve 67 derart ausgebildet, dass ein radialer Abstand 70 der Lagerrollen 61, 62 zum Kreiszentrum 69 in der rechts dargestellten ersten Position der Werkstückhaltergruppe 11 größer als ein radialer Abstand 71 der Lagerrollen 61, 62 zum Kreiszentrum 69 in der links dargestellten ersten Position der Werkstückhaltergruppe 11 ist. Durch die Veränderung des Abstands der Lagerrollen 61, 62 gegenüber dem Kreiszentrum 69 während einer Rotationsbewegung um die Rotorachse ergibt sich somit die gewünschte Schwenkbewegung der Lenkhebel 49, 50, die zu einer gegensinnigen parallelen Verschiebung der Lagerböcke 43, 44 und der daran befestigten Werkstückhalter 12, 15 führt. Unabhängig davon, ob der Rotor 40 eine kontinuierliche oder diskontinuierliche Rotationsbewegung um die Rotorachse vollzieht, ergibt sich für die Werkstückhalter 12, 15 die vom Schwenkwinkel abhängige Beabstandung mit einem exemplarisch der Teilung t1 entsprechenden ersten Abstand 72 in der rechten Darstellung der Werkstückhaltergruppe 11 und einem exemplarisch der Teilung t2 entsprechenden zweiten Abstand 73 in der linken Darstellung der Werkstückhaltergruppe 11.

Bei einer nicht dargestellten Ausführungsform der Erfindung werden die Werkstückhalter anstelle der mechanisch mittels der Steuerkurven angesteuerten Lenkhebel mit elektrischen oder fluidischen, insbesondere pneumatischen, Antrieben zueinander verstellt. Dementsprechend können die Verstellmittel als elektrische Linearantriebe, Lineardirektantriebe, Spindelantriebe, Drehantriebe, insbesondere Getriebemotoren, ausgebildet sein. Eine Ansteuerung solcher elektrischen Antriebe kann beispielsweise durch eine Abtastung einer rotatorischen Position des Rotors erfolgen, hierzu sind beispielsweise am Getriebegehäuse eine oder mehrere von einer Sensoreinrichtung abtastbare oder ablesbare Markierungen angebracht, die eine Information darüber bereitstellen können, welchen Schwenkwinkel der Rotor aktuell einnimmt, um daraufhin die gewünschte Verstellung der Beabstandung der Werkstückhalter vornehmen zu können. Bei einer Ausgestaltung der Verstellmittel als fluidische Antriebe, insbesondere als Stellzylinder oder Drehantriebe, kann eine einfache Änderung des Verstellbereichs für die Werkstückhalter beispielsweise durch Verstellung entsprechender mechanischer Endanschläge vorgenommen werden. Eine Ansteuerung der fluidischen Antriebe kann beispielsweise durch jeweils zugeordnete Wechselventile erfolgen, die während der Drehung des Rotors an ortsfest zur Rotorachse angeordneten Steuernocken vorbeigeführt werden und dabei eine Umschaltung der Druckversorgung für den jeweiligen Antrieb vornehmen, so dass dieser die Beabstandung der Werkstückhalter bedarfsgerecht vergrößert oder verkleinert.

Bei einer weiteren Ausgestaltung der Erfindung ist vorgesehen, dass eine Verstellung der Werkstückhalter einer Werkstückhaltergruppe mit einem Verstellbereich erfolgen kann, der größer als eine vorgebbare Teilung, insbesondere größer als eine Teilung des einlaufenden Fördermittels ist. Hierdurch können beispielsweise zumindest einfache Leerstellen am einlaufenden Fördermittel überwunden werden, also beispielsweise Positionen am Fördermittel, an denen kein Werkstück vorhanden ist, da dieses bereits in einer vorhergehenden Bearbeitungsstufe entfernt wurde.

## Patentansprüche

1. Fördereinrichtung zur Förderung von Werkstücken (2), mit einem drehbeweglich um eine Rotorachse (16) gelagerten Rotor (40), mit einem Drehantrieb (41) für eine Einleitung einer Rotationsbewegung auf den Rotor (40) und mit wenigstens einer Werkstückhaltergruppe (11), die wenigstens zwei am Rotor (40) angebrachte Werkstückhalter (12, 15) umfasst, die zu einer wenigstens paarweisen Aufnahme von Werkstücken (2) an einer Aufnahmeposition (5) und zu einer wenigstens paarweisen Abgabe von Werkstücken (2) an einer Abgabeposition (18) während der Rotationsbewegung des Rotors (40) ausgebildet sind, sowie mit Verstellmitteln (49, 50, 63, 64), die mit zumindest einem Werkstückhalter (12, 15) der Werkstückhaltergruppe (11) gekoppelt sind und die für eine zyklische Einstellung einer Beabstandung von Werkstückhaltern (12, 15) der Werkstückhaltergruppe (11) in Abhängigkeit von der Rotationsbewegung des Rotors (40) ausgebildet sind, **dadurch gekennzeichnet, dass** die Werkstückhalter (12, 15) der Werkstückhaltergruppe (11) stets parallel zueinander ausgerichtet sind.

2. Fördereinrichtung nach Anspruch 1, **dadurch gekennzeichnet, dass** die Verstellmittel (49, 50, 63, 64) für eine translatorische oder bogenförmige, insbesondere kreisbogenförmige, Relativbewegung wenigstens eines Werkstückhalters (12, 15) einer Werkstückhaltergruppe (11) gegenüber einem zweiten Werkstückhalter (12, 15) und gegenüber dem Rotor (40) in einer quer zur Rotorachse (16) ausgerichteten Bewegungsebene ausgebildet sind.

3. Fördereinrichtung nach Anspruch 2, **dadurch gekennzeichnet, dass** die Verstellmittel (49, 50, 6, 64) für eine gegensinnige Translationsbewegung paarweise angeordneter, schiebebeweglich am Rotor (40) aufgenommener Werkstückhalter (12, 15) einer Werkstückhaltergruppe (11) quer zu einer von der Rotorachse (16) ausgehenden Radialrichtung (48) ausgebildet sind.

4. Fördereinrichtung nach Anspruch 1, 2 oder 3, **dadurch gekennzeichnet, dass** die am Rotor (40) angebrachten Werkstückhalter (12, 15) für eine Rotationsbewegung um die Rotorachse (16) mit einer gemeinsamen Winkelgeschwindigkeit ausgebildet sind und dass die Verstellmittel (49, 50, 63, 64) für eine, vorzugsweise paarweise gegensinnige, Beeinflussung der Winkelgeschwindigkeiten einzelner Werkstückhalter (12, 15) ausgebildet sind.

5. Fördereinrichtung nach einem der vorhergehenden Ansprüche, **dadurch gekennzeichnet, dass** am Rotor (40) mehrere Werkstückhaltergruppen (11), insbesondere mehrere zueinander in gleicher Winkelteilung angebrachte Werkstückhaltergruppen (11), angeordnet sind.

6. Fördereinrichtung nach einem der vorhergehenden Ansprüche, **dadurch gekennzeichnet, dass** die Verstellmittel (49, 50, 63, 64) für den jeweiligen Werkstückhalter (12, 15) einen beweglich mit dem Werkstückhalter (12, 15) und/oder dem Rotor (40) gekoppelten Lenkhebel (49, 50) und eine drehfest zur Rotorachse angeordnete Steuerkurve (63, 64) für den Lenkhebel (49, 50) umfassen, um während der Rotationsbewegung des Rotors (40) eine, insbesondere rotatorische, Zwangsbewegung des Lenkhebels (49, 50) zu bewirken.

7. Fördereinrichtung nach Anspruch 6, **dadurch gekennzeichnet, dass** die Steuerkurve (63, 64) in einer quer zu einer Rotorachse (16) des Rotors (40) ausgerichteten Steuerkurvenebene von einer unrunden, insbesondere elliptischen, Hüllkurve umgeben ist und/oder dass die Lenkhebel (49, 50) jeweils gleichartig innerhalb benachbarter Werkstückhaltergruppen (11) angeordneter Werkstückhalter jeweils an gleichen Steuerkurven anliegen.

8. Fördereinrichtung nach einem der vorhergehenden Ansprüche, **dadurch gekennzeichnet, dass** die Verstellmittel (49, 50, 63, 64) für eine konstante Beabstandung von jeweils paarweise angeordneten Werkstückhaltern (12, 15) einer Werkstückhaltergruppe (11) zu einer mittig zwischen den Werkstückhaltern (12, 15) angeordneten, insbesondere die Rotorachse (16) umfassenden, Mittelebene ausgebildet sind.

9. Bearbeitungssystem zur Bearbeitung von Werkstücken (2), mit einem ersten Fördermittel (3), das für eine Bereitstellung von Werkstücken (2) ausgebildet ist, mit einer Bearbeitungseinrichtung (20), die für eine Bearbeitung der vom ersten Fördermittel (3) bereitgestellten Werkstücke (2) und für einen Weitertransport der Werkstücke (2) an ein zweites Fördermittel (37) ausgebildet ist, mit einem zweiten Fördermittel (37), das für einen Abtransport der Werkstücke (2) ausgebildet ist, **dadurch gekennzeichnet, dass** zwischen dem ersten Fördermittel (3) und der Bearbeitungseinrichtung (20) und/oder zwischen der Bearbeitungseinrichtung (20) und dem zweiten Fördermittel (37) eine Fördereinrichtung (9, 35) nach einem der vorhergehenden Ansprüche angeordnet ist.

10. Bearbeitungssystem nach Anspruch 9, **dadurch gekennzeichnet, dass** die Bearbeitungseinrichtung (20) für eine diskontinuierliche Bearbeitung und für einen diskontinuierlichen Weitertransport der Werkstücke (2) ausgebildet ist und dass das erste Fördermittel (3) und/oder das zweite Fördermittel (37) mit einem der jeweiligen Fördereinrichtung (9, 35) zugeordneten, zumindest bereichsweise diskontinuierlich arbeitenden Förderabschnitt ausgestattet sind.

11. Bearbeitungssystem nach Anspruch 10, **dadurch gekennzeichnet, dass** am ersten Fördermittel (3) eine Beabstandung der Werkstücke (2) gemäß einer ersten Teilung (t1) ausgebildet ist, dass an der Bearbeitungseinrichtung (20) eine Beabstandung der Werkstücke (2) gemäß einer zweiten Teilung (t2) ausgebildet ist und dass am dritten Fördermittel (37) eine Beabstandung der Werkstücke (2) gemäß einer dritten Teilung ausgebildet ist, wobei die erste und/oder die zweite Fördereinrichtung (9, 35) für einen Ausgleich unterschiedlicher Teilungen während der Rotationsbewegung des Rotors (40) ausgebildet sind.

12. Verfahren zur Förderung und Bearbeitung eines Werkstücks (2) mit den Schritten: Bereitstellen eines Werkstücks (2) von einem ersten Fördermittel (3) an eine Bearbeitungseinrichtung (20), Bearbeiten des Werkstücks (2) mit der Bearbeitungseinrichtung (20) und Abtransportieren des Werkstücks (2) von der Bearbeitungseinrichtung (20) mit einem zweiten Fördermittel (37), wobei das erste Fördermittel (3) und/oder das zweite Fördermittel (37) eine von der Bearbeitungseinrichtung (20) abweichende Teilung für eine Beabstandung der Werkstücke (2) längs einer Förderrichtung (4) aufweisen und wobei eine Anpassung einer Teilung für die Werkstücke (2) zwischen dem ersten Fördermittel (3) und der Bearbeitungseinrichtung (20) und/oder zwischen der Bearbeitungseinrichtung (20) und dem zweiten Fördermittel (37) durch Verkleinerung oder Vergrößerung einer Beabstandung zwischen jeweils wenigstens zwei gleichzeitig vom ersten Fördermittel (3) abgenommenen oder an das zweite Fördermittel (37) bereitgestellten Werkstücken (2) erfolgt, wobei eine Anpassung der Beabstandung der Werkstücke (2) zwischen dem ersten Fördermittel (3) und der Bearbeitungseinrichtung (20) und/oder zwischen der Bearbeitungseinrichtung (20) und dem zweiten Fördermittel (37) mit einer Fördereinrichtung (9, 35) mit einem drehbeweglich um eine Rotorachse (16) gelagerten Rotor (40), mit einem Drehantrieb (41) für eine Einleitung einer Rotationsbewegung auf den Rotor (40) und mit wenigstens einer Werkstückhaltergruppe (11), die wenigstens zwei am Rotor (40) angebrachte Werkstückhalter (12, 15) umfasst, die zu einer wenigstens paarweisen Aufnahme von Werkstücken (2) an einer Aufnahmeposition (5) und zu einer wenigstens paarweisen Abgabe von Werkstücken (2) an einer Abgabeposition (18) während der Rotationsbewegung des Rotors (40) ausgebildet sind, sowie mit Verstellmitteln (49, 50, 63, 64), die mit zumindest einem Werkstückhalter (12, 15) der Werkstückhaltergruppe (11) gekoppelt sind und die für eine zyklische Einstellung einer Beabstandung von Werkstückhaltern (12, 15) der Werkstückhaltergruppe (11) in Abhängigkeit von der Rotationsbewegung des Rotors (40) ausgebildet sind, wobei die Werkstückhalter (12, 15) der Werkstückhaltergruppe (11) stets parallel zueinander ausgerichtet sind, erfolgt.

13. Verfahren nach Anspruch 12, **dadurch gekennzeichnet, dass** eine Förderung der Werkstücke (2) zwischen dem ersten Fördermittel (3), der Bearbeitungseinrichtung (20) und dem zweiten Fördermittel (37) zumindest abschnittsweise diskontinuierlich erfolgt.

## Claims

1. Handling device for handling workpieces (2), comprising a rotor (40) mounted for rotation about a rotor axis (16), a rotary drive (41) for introducing a rotary motion into the rotor (40) and at least one workholder assembly (11), the workholder assembly (11) comprising at least two workholders (12, 15) which are mounted on the rotor (40) and designed for an at least paired picking up of workpieces (2) at a pickup position (5) and for an at least paired delivery of workpieces (2) at a delivery position (18) during the rotary motion of the rotor (40), and further comprising adjusting means (49, 50, 63, 64) which are coupled to at least one workholder (12, 15) of the workholder assembly (11) and which are designed for a cyclical adjustment of a spacing of workholders (12, 15) of the workholder assembly (11) as a function of the rotary motion of the rotor (40), **characterized in that** the workholders (12, 15) of the workholder assembly (11) are always oriented parallel to one another.

2. Handling device according to claim 1, **characterised in that** the adjusting means (49, 50, 63, 64) are designed for a translational or arcuate, in particular circular arcuate, movement of at least one workholder (12, 15) of a workholder assembly (11) relative to a second workholder (12, 15) and relative to the rotor (40) in a movement plane oriented perpendicular to the rotor axis (16).

3. Handling device according to claim 2, **characterised in that** the adjusting means (49, 50, 63, 64) are designed for a translational movement in opposite directions of paired workholders (12, 15) of a workholder assembly (11) which are slidably mounted on the rotor (40), perpendicular to a radial direction (48) starting from the rotor axis (16).

4. Handling device according to claim 1, 2 or 3, **characterised in that** the workholders (12, 15) mounted on the rotor (40) are designed for a rotary motion about the rotor axis (16) with a common angular velocity, and **in that** the adjusting means (49, 50, 63, 64) are designed for a preferably paired influence on the angular velocities of individual workholders (12, 15) in opposite directions.

5. Handling device according to any of the preceding claims, **characterised in that** several workholder assemblies (11), in particular several workholder assemblies (11) mounted with identical angular pitch, are mounted on the rotor (40).

6. Handling device according to any of the preceding claims, **characterised in that** the adjusting means (49, 50, 63, 64) for the respective workholder (12, 15) comprise a steering lever (49, 50) which is movably coupled to the workholder (12, 15) and/or to the rotor (40) and a control cam (63, 64) for the steering lever (49, 50) which is non-rotatable relative to the rotor axis, in order to generate during the rotary motion of the rotor (40) an in particular rotational positive movement of the steering lever (49, 50).

7. Handling device according to claim 6, **characterised in that** the control cam (63, 64) is surrounded in a control cam plane oriented perpendicular to a rotor axis (16) of the rotor (40) by a non-circular, in particular elliptical, envelope curve, and/or in that the steering levers (49, 50) lie against the same control cams in the same way within workholders of adjacent workholder assemblies (11).

8. Handling device according to any of the preceding claims, **characterised in that** the adjusting means (49, 50, 63, 64) are designed for a constant distance of workholders (12, 15) of a workholder assembly (11) which are arranged in pairs from a central plane located in the middle between the workholders (12, 15) and containing the rotor axis (16) in particular.

9. Processing system for processing workpieces (2), comprising a first conveying means (3) designed for a provision of workpieces (2), a processing device (20) designed for processing the workpieces provided (2) by the first conveying means (3) and for transferring the workpieces (2) to a second conveying means (37), and a second conveying means (37) designed for carrying away the workpieces (2), **characterised in that** a handling device (9, 35) according to any of the preceding claims being located between the first conveying means (3) and the processing device (20) and/or between the processing device (20) and the second conveying means (37).

10. Processing system according to claim 9, **characterised in that** the processing device is (20) designed for a discontinuous processing and for a discontinuous transfer of the workpieces (2), and **in that** the first conveying means (3) and/or the second conveying means (37) is/are equipped with a conveying section which is assigned to the respective handling device (9, 35) and which operates discontinuously at least in some regions.

11. Processing system according to claim 10, **characterised in that** a spacing of the workpieces (2) according to a first pitch (t1) is formed on the first conveying means (3), **in that** a spacing of the workpieces (2) according to a second pitch (t2) is formed on the processing device (20) and **in that** a spacing of the workpieces (2) according to a third pitch (t3) is formed on the third conveying means (37), the first and/or the second handling device (9, 35) being designed for a compensation of different pitches during the rotary motion of the rotor (40).

12. Method for handling and processing a workpiece (2), comprising the steps of: the provision of a workpiece (2) to a processing device (20) by a first conveying means (3), the processing of the workpiece (2) with the processing device (20) and the carrying away of the workpiece (2) from the processing device (20) by a second conveying means (37), wherein the first conveying means (3) and/or the second conveying means (37) has/have a pitch for a spacing of the workpieces (2) along a conveying direction (4) which differs from that of the processing device (20) and wherein a pitch for the workpieces (2) is adapted between the first conveying means (3) and the processing device (20) and/or between the processing device (20) and the second conveying means (37) by reducing or increasing a spacing between at least two workpieces (2) which are simultaneously taken off the first conveying means (3) or transferred to the second conveying means (37) wherein the spacing of the workpieces (2) is adapted between the first conveying means (3) and the processing device (20) and/or between the processing device (20) and the second conveying means (37) by means of a handling device (9, 35) having a rotor (40) mounted for rotation about a rotor axis (16), a rotary drive (41) for introducing a rotary motion into the rotor (40) and at least one workholder assembly (11), the workholder assembly (11) comprising at least two workholders (12, 15) which are mounted on the rotor (40) and designed for an at least paired picking up of workpieces (2) at a pickup position (5) and for an at least paired delivery of workpieces (2) at a delivery position (18) during the rotary motion of the rotor (40), and further comprising adjusting means (49, 50, 63, 64) which are coupled to at least one workholder (12, 15) of the workholder assembly (11) and which are designed for a cyclical adjustment of a spacing of workholders (12, 15) of the workholder assembly (11) as a function of the rotary motion of the rotor (40), wherein the workholders (12, 15) of the workholder assembly (11) are always oriented parallel to one another.

13. Method according to claim 12, **characterized in that** the workpieces (2) are conveyed at least in some sections discontinuously between the first conveying means (3), the processing device (20) and the second conveying means (37).

## Revendications

1. Dispositif de transport pour le transport de pièces à usiner (2), avec un rotor (40) logé de manière mobile en rotation autour d'un axe de rotor (16), avec un entraînement rotatif (41) pour une introduction d'un mouvement de rotation sur le rotor (40) et avec au moins un groupe de support de pièces à usiner (11) qui comporte au moins deux supports de pièces à usiner (12, 15) montés sur le rotor (40), qui sont réalisés pour un logement au moins par paire de pièces à usiner (2) sur une position de réception (5) et pour une remise au moins par paire de pièces à usiner (2) sur une position de remise (18) pendant le mouvement de rotation du rotor (40), ainsi qu'avec des moyens de réglage (49, 50, 63, 64) qui sont couplés avec au moins un support de pièces à usiner (12, 15) du groupe de support de pièces à usiner (11) et qui sont réalisés pour un réglage cyclique d'un espacement de supports de pièces à usiner (12, 15) du groupe de support de pièces à usiner (11) en fonction du mouvement de rotation du rotor (40), **caractérisé en ce que** les supports de pièces à usiner (12, 15) du groupe de support de pièces à usiner (11) sont toujours orientés parallèlement l'un à l'autre.

2. Dispositif de transport selon la revendication 1, **caractérisé en ce que** les moyens de réglage (49, 50, 63, 64) sont réalisés pour un mouvement relatif translatoire ou arqué, en particulier en arc de cercle au moins d'un support de pièces à usiner (12, 15) d'un groupe de support de pièces à usiner (11) par rapport à un deuxième support de pièces à usiner (12, 15) et par rapport au rotor (40) dans un plan de mouvement orienté transversalement à l'axe de rotor (16).

3. Dispositif de transport selon la revendication 2, **caractérisé en ce que** les moyens de réglage (49, 50, 63, 64) sont réalisés pour un mouvement translatoire en sens inverse de supports de pièces à usiner (12, 15) reçus de manière coulissante sur le rotor (40), agencés par paire d'un groupe de support de pièces à usiner (11) transversalement à un sens radial (48) partant de l'axe de rotor (16).

4. Dispositif de transport selon la revendication 1, 2 ou 3, **caractérisé en ce que** les supports de pièces à usiner (12, 15) montés sur le rotor (40) sont réalisés pour un mouvement de rotation autour de l'axe de rotor (16) avec une vitesse angulaire commune et **en ce que** les moyens de réglage (49, 50, 63, 64) sont réalisés pour une influence de préférence par paire en sens inverse des vitesses angulaires de supports de pièces à usiner (12, 15) individuels.

5. Dispositif de transport selon l'une quelconque des revendications précédentes, **caractérisé en ce que** plusieurs groupes de support de pièces à usiner (11), en particulier plusieurs groupes de support de pièces à usiner (11) montés dans le même pas angulaire les uns par rapport aux autres sont agencés sur le rotor (40).

6. Dispositif de transport selon l'une quelconque des revendications précédentes, **caractérisé en ce que** les moyens de réglage (49, 50, 63, 64) comportent pour le support de pièces à usiner (12, 15) respectif un levier de direction (49, 50) couplé de manière mobile avec le support de pièces à usiner (12, 15) et/ou le rotor (40) et une came de commande (63, 64) agencée de manière fixe en rotation par rapport à l'axe de rotor pour le levier de direction (49, 50) afin de provoquer pendant le mouvement de rotation du rotor (40) un mouvement forcé en particulier rotatif du levier de direction (49, 50).

7. Dispositif de transport selon la revendication 6, **caractérisé en ce que** la came de commande (63, 64) est entourée dans un plan de came de commande orienté transversalement à un axe de rotor (16) du rotor (40) par une came d'enveloppe non ronde, en particulier elliptique et/ou **en ce que** les leviers de direction (49, 50) des supports de pièces à usiner agencés respectivement de la même façon dans des groupes de supports de pièces à usiner (11) contigus reposent respectivement contre des cames de commande identiques.

8. Dispositif de transport selon l'une quelconque des revendications précédentes, **caractérisé en ce que** les moyens de réglage (49, 50, 63, 64) sont réalisés pour un espacement constant de supports de pièces à usiner (12, 15) agencés respectivement par paire d'un groupe de supports de pièces à usiner (11) par rapport à un plan médian agencé au milieu entre les supports de pièces à usiner (12, 15), comprenant en particulier l'axe de rotor (16).

9. Système d'usinage pour l'usinage de pièces à usiner (2) avec un premier moyen de transport (3) qui est réalisé pour une mise à disposition de pièces à usiner (2), avec un dispositif d'usinage (20) qui est réalisé pour un usinage des pièces à usiner (2) mises à disposition par le premier moyen de transport (3) et pour une suite du transport des pièces à usiner (2) sur un second moyen de transport (37), avec un second moyen de transport (37) qui est réalisé pour un transport des pièces à usiner (2), **caractérisé en ce que**
un dispositif de transport (9, 35) selon l'une quelconque des revendications précédentes est agencé entre le premier moyen de transport (3) et le dispositif d'usinage (20) et/ou entre le dispositif d'usinage (20) et le second moyen de transport (37).

10. Système d'usinage selon la revendication 9, **caractérisé en ce que** le dispositif d'usinage (20) est réalisé pour un usinage discontinu et pour une suite de transport discontinue des pièces à usiner (2) et **en ce que** le premier moyen de transport (3) et/ou le second moyen de transport (37) sont équipés d'une section de transport travaillant au moins par endroits en discontinu, associée au dispositif de transport respectif (9, 35).

11. Système d'usinage selon la revendication 10, **caractérisé en ce que** sur le premier moyen de transport (3), un espacement des pièces à usiner (2) est réalisé selon un premier pas (t1), **en ce que** sur le dispositif d'usinage (20), un espacement des pièces à usiner (2) est réalisé selon un deuxième pas (t2) et **en ce que** sur le troisième moyen de transport (37), un espacement des pièces à usiner (2) est réalisé selon un troisième pas, dans lequel le premier et/ou le second dispositif de transport (9, 35) sont réalisés pour une compensation de différents pas pendant le mouvement de rotation du rotor (40).

12. Procédé de transport et d'usinage d'une pièce à usiner (2) avec les étapes : mise à disposition d'une pièce à usiner (2) par un premier moyen de transport (3) sur un dispositif d'usinage (20), usinage de la pièce à usiner (2) avec le dispositif d'usinage (20) et transport de la pièce à usiner (2) par le dispositif d'usinage (20) avec un second moyen de transport (37), dans lequel le premier moyen de transport (3) et/ou le second moyen de transport (37) présentent un pas divergeant du dispositif d'usinage (20) pour un espacement des pièces à usiner le long d'un sens de transport (4) et dans lequel une adaptation d'un pas pour les pièces à usiner (2) est effectuée entre le premier moyen de transport (3) et le dispositif d'usinage (20) et/ou entre le dispositif d'usinage (20) et le second moyen de transport (37) par réduction ou agrandissement d'un espacement entre respectivement au moins deux pièces à usiner (2) remises en même temps du premier moyen de transport (3) ou mises à disposition sur le second moyen de transport (37), dans lequel une adaptation de l'espacement des pièces à usiner (2) entre le premier moyen de transport (3) et le dispositif d'usinage (20) et/ou entre le dispositif d'usinage (20) et le second moyen de transport (37) avec un dispositif de transport (9, 35) avec un rotor (40) logé de manière mobile en rotation autour d'un axe de rotor (16), avec un entraînement rotatif (41) pour une introduction d'un mouvement de rotation sur le rotor (40) et avec au moins un groupe de support de pièces à usiner (11) qui comporte au moins deux supports de pièces à usiner (12, 15) montés sur le rotor (40), qui sont réalisés pour un logement au moins par paire de pièces à usiner (2) sur une position de réception (5) et pour une remise au moins par paire de pièces à usiner (2) sur une position de remise (18) pendant le mouvement de rotation du rotor (40), ainsi qu'avec des moyens de réglage (49, 50, 63, 64) qui sont couplés à au moins un support de pièces à usiner (12, 15) du groupe de support de pièces à usiner (11) et qui sont réalisés pour un réglage cyclique d'un espacement de supports de pièces à usiner (12, 15) du groupe de supports de pièces à usiner (11) en fonction du mouvement de rotation du rotor (40), dans lequel les supports de pièces à usiner (12, 15) du groupe de support de pièces à usiner (11) sont toujours orientés parallèlement l'un à l'autre.

13. Procédé selon la revendication 12, **caractérisé en ce qu'**un transport des pièces à usiner (2) est effectué au moins par section en discontinu entre le premier moyen de transport (3), le dispositif d'usinage (20) et le second moyen de transport (37).
